# EUROPÄISCHE PATENTANMELDUNG

(11) **EP 0 619 218 A1**
(43) Veröffentlichungstag der Anmeldung: **12.10.1994**
(21) Anmeldenummer: 93105638.6
(22) Anmeldetag: 06.04.1993
(51) Int. Cl.: B62K 25/04

(54) **Kettenloses Fahrrad**

(71) Anmelder: Lu, Teng-Hui, Kaohsiung (TW)
(72) Erfinder: Lu, Teng-Hui, Kaohsiung (TW)
(74) Vertreter: Fritz, Edmund Lothar, Dipl.-Chem.

(57) **Zusammenfassung**

Die vorliegende Erfindung betrifft ein kettenloses Fahrrad, bei dem der Pedalantrieb unmittelbar am Hinterrad angreift und der Sitz (1) etwa oberhalb der Nabe des Hinterrads angeordnet ist. Erfindungsgemäß ist vorgesehen, den vorderen Bereich des Rahmens gelenkig auszubilden, so daß Stellung des Vorderrads und der Gabel gegenüber dem hinteren Rahmen, der mit dem Hinterrad und dem Sitz verbunden ist, im Winkel veränderlich ist. Der Schwerpunkt des Fahrrads variiert daher in Anpassung an die jeweilige Fahrsituation. Die sich diagonal erstreckende Mittelstrebe (2) besteht aus einer vorderen Teilstrebe (20) und einer hinteren Teilstrebe (21), die über ein Gelenk (11) verbunden sind. Zwischen der horizontalen Rahmenstrebe (20) und der Lenkerstange (3) ist ebenfalls ein Gelenk (120) angeordnet.

## Beschreibung

### Technologischer Hintergrund der Erfindung

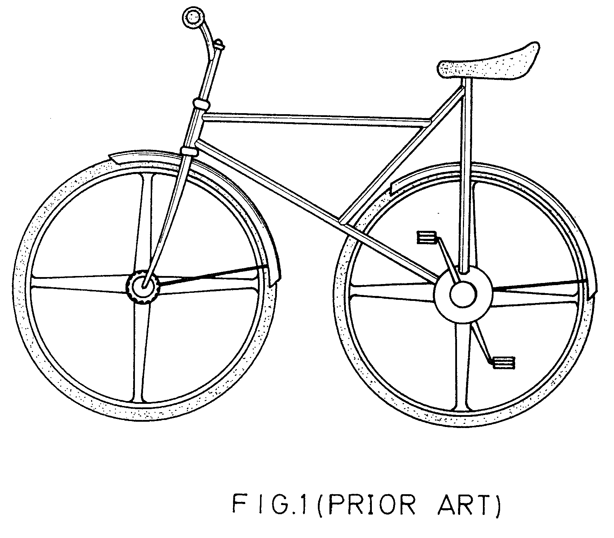

Der Sitz befindet sich bei den meisten herkömmlichen kettenangetriebenen Fahrrädern zwischen dem Vorderrad und dem Hinterrad. Das Fahrrad mit Kettenantrieb ist daher zum einen ergonomisch und es entstehen außerdem im allgemeinen keine Probleme im Hinblick auf den Schwerpunkt des Fahrrads. Anders ist dies bei kettenlosen Fahrrädern (siehe Fig. 1). Bei dem kettenlosen Fahrrad ist der Sitz weiter hinten angeordnet und zwar etwa oberhalb des Hinterrads. Dies kann dazu führen, daß das Fahrrad bedingt durch das Gewicht des Benutzers vorn angehoben wird. Dieser wesentliche Nachteil des kettenlosen Fahrrads soll im Rahmen der vorliegenden Erfindung behoben werden. Dies ist nur dadurch möglich, daß das genannte Problem im Hinblick auf den relativ weit hinten liegenden Schwerpunkt des kettenlosen Fahrrads gelöst wird.

### Zusammenfassende Darstellung der Erfindung

Die vorliegende Erfindung schlägt vor, den vorderen Bereich des Rahmens bei einem kettenlosen Fahrrad gelenkig so auszubilden, daß die Stellung des Vorderrads und der Gabel gegenüber dem hinteren Rahmen, der mit dem Hinterrad und dem Sitz verbunden ist, im Winkel veränderlich ist. Dadurch wird erreicht, daß der Schwerpunkt des Fahrrads in Anpassung an die jeweilige Fahrsituation variiert. Die Position des Fahrers während der Fahrt wird dadurch stabilisiert. Außerdem wird durch die erfindungsgemäße Lösung ein erhöhter Dämpfungseffekt im Hinblick auf den vorderen Teil des Fahrrads mit Gabel und Vorderrad erzielt.

Nachfolgend wird die vorliegende Erfindung anhand eines Ausführungsbeispiels unter Bezugnahme auf die beiliegenden Zeichnungen näher beschrieben. Dabei zeigen
- Fig. 1: eine schematische Ansicht eines kettenlosen Fahrrads wie es aus dem Stand der Technik bekannt ist;
- Fig. 2: eine Ansicht eines kettenlosen Fahrrads gemäß der Erfindung;
- Fig. 3: eine Detailansicht eines Gelenks;
- Fig. 4: eine Detailansicht einer Dämpfungseinrichtung;
- Fig. 5: eine Detailansicht der hinteren Befestigung der horizontalen Rahmenstrebe;
- Fig. 6: eine Detailansicht der Befestigung der bogenförmigen Verbindungsstrebe;
- Fig. 7: eine Ansicht eines erfindungsgemäßen kettenlosen Fahrrads im Betrieb bei Fahrt auf einem unebenen Untergrund.

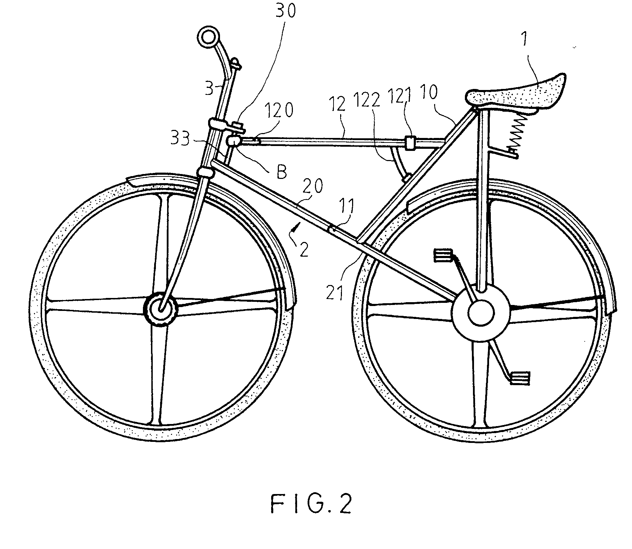

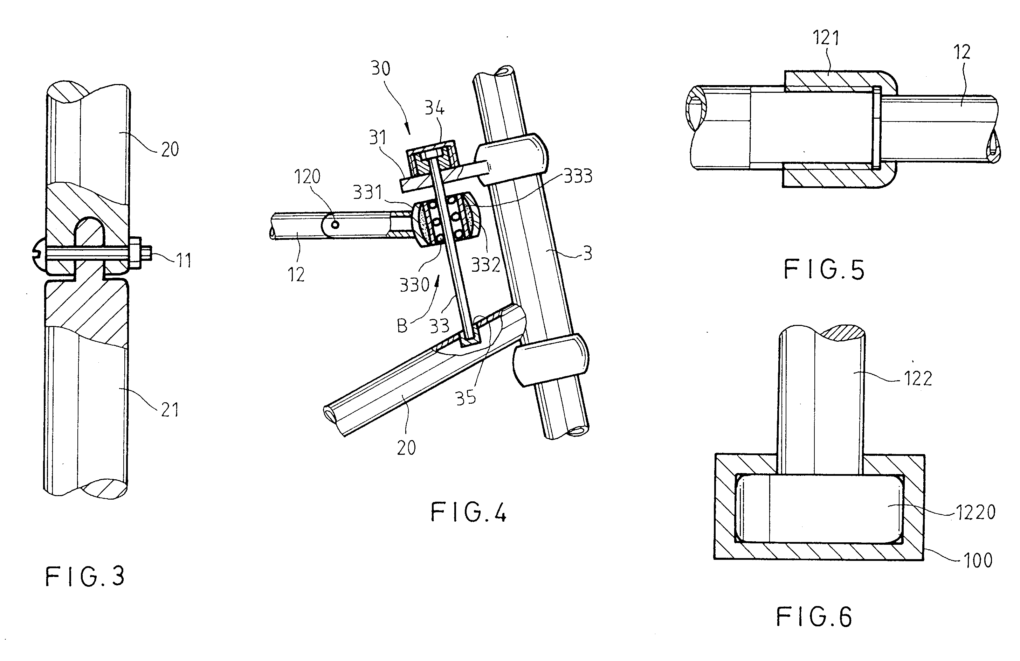

Es wird zunächst Bezug genommen auf Fig. 2. Das erfindungsgemäße kettenlose Fahrrad weist eine Hauptrahmenstrebe 10 auf, die sich vom Sitz 1 aus schräg nach unten erstreckt. Die Hauptrahmenstrebe 10 ist fest verbunden mit der hinteren Teilstrebe 21 der diagonal sich etwa von der Nabe des Hinterrads bis unterhalb des Lenkers erstreckenden Mittelstrebe 2. Die vordere Teilstrebe 20 der Mittelstrebe 2 und die hintere Teilstrebe 21 der Mittelstrebe sind über ein Gelenk 11 verbunden. Dieses Gelenk ist in Fig. 3 im Detail dargestellt.

Die Hauptrahmenstrebe 10 ist über eine Gewindehülse 121 mit der horizontalen Rahmenstrebe 12 verbunden. Die horizontale Rahmenstrebe 12, die Hauptrahmenstrebe 10 und die Mittelstrebe 2 sind jeweils im spitzen Winkel zueinander angeordnet und zwar annähernd in Form eines Dreiecks. Vorn stoßen die horizontale Rahmenstrebe 12 und die vordere Teilstrebe 20 der Mittelstrebe 2 allerdings nicht zusammen, sondern sind über die Pufferstange 33 verbunden (siehe auch Fig. 4). Die horizontale Rahmenstrebe 12 ist über die Verbindungsvorrichtung 30 mit der Lenkerstange 3 gelenkig verbunden, da die mit der Verbindungsvorrichtung 30 fixierte Verlängerung der horizontalen Rahmenstrebe 12 mit letzterer über ein Gelenk 120 um eine horizontale Achse schwenkbar verbunden ist (siehe Fig. 4).

Zwischen der horizontalen Rahmenstrebe 12 und der Hauptrahmenstrebe 10 verläuft eine etwas bogenförmig ausgebildete Verbindungsstrebe 122, die sich schräg nach unten erstreckt. Diese Verbindungsstrebe 122 ist mit dem hinteren Teil der horizontalen Rahmenstrebe 12 fest verbunden und mit der Hauptrahmenstrebe 10 über eine sogenannte Inlay-Verbindung verbunden, die in Fig. 6 dargestellt ist. Dabei greift ein Einlegeteil 1220 der Verbindungsstrebe 122 in eine Nut 100 einer Anformung der Hauptrahmenstrebe 10.

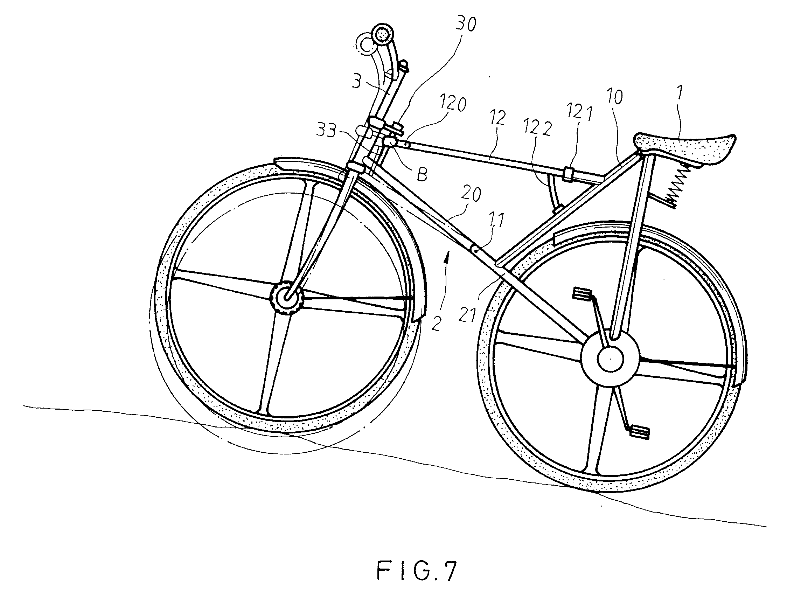

Es wird weiter Bezug genommen auf die Figuren 2 und 4. Die Verbindungsvorrichtung 30 ist über die Befestigungsplatte 31 fest mit der Lenkerstange 3 verbunden. Durch die Befestigungsplatte 31 erstreckt sich der Pufferstab 33, der mittels der Mutter 34 auf der Oberseite der Befestigungsplatte 31 befestigt ist. Der untere Teil der Verbindungsvorrichtung erstreckt sich bis in die vordere Teilstrebe 20 der Mittelstrebe 2 hinein. Dort befindet sich ein Schlitz 35 in der Teilstrebe 20, der den Pufferstab 33 aufnimmt, so daß der Pufferstab 33 parallel zu der Lenkerstange 3 ausgerichtet ist. Die Verbindungsvorrichtung 30 verbindet die vordere Teilstrebe 20 der Mittelstrebe 2 mit der horizontalen Rahmenstrebe 12 , wobei der gelenkig mit der Rahmenstrebe 12 verbundene Gelenkkopf 331 konzentrisch auf der Achse des Pufferstabs 33 angebracht ist und ein Kugellager 330 in dem Gelenkkopf 331 als Führung auf dem Pufferstab 33 dient. Außenseitig sind die Kugeln des Kugellagers 330 in einer Hülse des Gelenkkopfs 331 aufgenommen, wobei diese Hülse eine Dämpfungseinrichtung 332 aus einem weichen nachgiebigen Material umgibt. Diese Dämpfungseinrichtung umgibt wiederum eine Außenhülse 333 des Gelenkkopfs. Dadurch ist eine empfindliche schnell ansprechende Verlagerung der horizontalen Rahmenstrebe 12 gegenüber dem Pufferstab 33 gewährleistet. Die vorbeschriebene Anordnung wirkt zusammen mit dem Gelenk 120 am vorderen Ende der horizontalen Rahmenstrebe 12 und dem Verbindungsgelenk 11 zwischen der vorderen Teilstrebe 20 und der hinteren Teilstrebe 21 der Hauptrahmenstrebe 10. Aufgrund dieser Anordnung ist es möglich, daß sich die horizontale Rahmenstrebe 12 unter axialer Verschiebung des Gelenkkopfs 331 auf dem Pufferstab 33 aufwärts- bzw. abwärtsbewegt und im Bereich des Gelenks 120 Winkelveränderungen der horizontalen Rahmenstrebe 12 gegenüber dem Gelenkkopf 331 und dem Pufferstab 33 stattfinden. Dadurch werden bei der Fahrt auftretende Stoßkräfte reduziert. Dieser Dämpfungseffekt ist in der Darstellung gemäß Fig. 7 anschaulich wiedergegeben. Die Darstellung zeigt die Bewegungen der Lenkerstange 3 und des Vorderrads sowie der vorderen Teilstrebe 20 gegenüber dem hinteren Teil des Rahmens bei Fahrt auf einem unebenen Untergrund. Der Schwerpunkt von Fahrer und Fahrrad wird dadurch verändert. Wie man aus Fig. 7 erkennen kann, bewegt sich das Vorderrad gegenüber dem Hinterrad nach oben, wenn man mit dem kettenlosen Fahrrad eine Böschung hinauffährt. Das Vorderrad liegt dabei höher als das Hinterrad. Die Lenkerstange 3 schwenkt um die horizontale Achse des Gelenks 11. Wenn sich der Sitz 1 durch die Schwenkbewegung um die Achse des Gelenks 11 nach vorn hin verlagert, verlagert sich gleichzeitig der Schwerpunkt des Fahrrads nach vorn.

## Patentansprüche

1. Kettenloses Fahrrad mit einem direkt am Hinterrad angreifenden Pedalantrieb, dadurch gekennzeichnet, daß eine sich vom Sitz (1) aus nach unten erstreckende Hauptrahmenstrebe (10) mit einer hinteren Teilstrebe (21) einer Mittelstrebe (2) des Rahmens in einem Winkel fest verbunden ist, wobei die Mittelstrebe sich etwa von der Nabe des Hinterrads bis zum unteren Teil der Lenkerstange (3) erstreckt und diese Mittelstrebe (2) aus der hinteren Teilstrebe (21) und der diese nach vorn hin verlängernden vorderen Teilstrebe (20) besteht, die über ein Gelenk (11) miteinander verbunden sind.

2. Kettenloses Fahrrad nach Anspruch 1, dadurch gekennzeichnet, daß sich zwischen der Hauptrahmenstrebe (10) und der Lenkerstange (3) eine horizontale Rahmenstrebe (12) erstreckt, die mit der Hauptrahmenstrebe (10) in einem spitzen Winkel fest verbunden ist und mit der Lenkerstange (3) über ein Gelenk (120) und eine Verbindungsvorrichtung (30) mit Höhenspiel verbunden ist.

3. Kettenloses Fahrrad nach Anspruch 1 oder 2, dadurch gekennzeichnet, daß die Verbindungsvorrichtung (30) eine Befestigungsplatte (31) umfaßt, die mit der Lenkerstange (3) verbunden ist sowie einen Pufferstab (33), der an seinem oberen Ende an der Befestigungsplatte (31) festgelegt ist und an seinem unteren Ende mit der vorderen Teilstrebe (20) der Mittelstrebe (2) verbunden ist, wobei ein Gelenkkopf (331), der sich am vorderen Ende der horizontalen Rahmenstrebe (12) befindet, auf dem Pufferstab (33) in Richtung etwa parallel zur Lenkerstange (3) axial verschiebbar gelagert ist.

4. Kettenloses Fahrrad nach einem der Ansprüche 1 bis 3, dadurch gekennzeichnet, daß zwischen Gelenkkopf (331) und Pufferstab (33) eine Kugellagerung (330) vorgesehen ist.

5. Kettenloses Fahrrad nach einem der Ansprüche 1 bis 4, dadurch gekennzeichnet, daß innerhalb des Gelenkkopfs (331) eine Hülse angeordnet ist, die die Kugellagerung (330) aufnimmt und zwischen der Hülse und einer Außenhülse (333) des Gelenkkopfs eine Dämpfungseinrichtung (332) aus einem weichen nachgiebigen Material angeordnet ist.

6. Kettenloses Fahrrad nach einem der Ansprüche 1 bis 5, dadurch gekennzeichnet, daß zwischen der horizontalen Rahmenstrebe (12) und der Hauptrahmenstrebe (10) eine etwas bogenförmig ausgebildete kurze Verbindungsstrebe (122) verläuft.
